# EUROPÄISCHE PATENTSCHRIFT

(11) **EP 2 902 644 B1**
(45) Veröffentlichungstag und Bekanntmachung des Hinweises auf die Patenterteilung: **10.05.2017**
(21) Anmeldenummer: 15150810.8
(22) Anmeldetag: 12.01.2015
(51) Int. Cl.: F16B 21/08, B60R 13/02

(54) **Baugruppe zum Befestigen von Verkleidungsteilen**
Assembly device for fastening trim parts
Ensemble de fixation pour la fixation de pièces de revêtement

(30) Priorität: 31.01.2014 FR 1400267
(43) Veröffentlichungstag der Anmeldung: 05.08.2015
(73) Patentinhaber: ITW Fastener Products GmbH, 58642 Iserlohn (DE)
(72) Erfinder: Kuhm, Michel, 67340 Ingwiller (FR); Ouine, Emmanuel, 67240 Bischwiller (FR)
(74) Vertreter: Hauck Patentanwaltspartnerschaft mbB

(56) Entgegenhaltungen:
- EP-A1- 1 361 117
- WO-A1-2007/104530
- DE-A1-102004 057 400
- DE-U1-202013 006 326
- JP-U- S63 181 561
- US-A1- 2014 003 884

## Beschreibung

Die Erfindung betrifft eine Baugruppe zum Befestigen von Verkleidungsteilen.

Teil der Baugruppe ist ein Befestigungselement, das insbesondere dazu dient, ein Verkleidungsteil, beispielsweise eine Türverkleidung, an einem Träger anzubringen, der wiederum an einem fahrzeugfesten Bauteil angebracht ist, beispielweise einem Karosserieteil.

Bei einigen Verkleidungsteilen ist es erforderlich, dass sie demontierbar sind. Hierfür können rastbare Befestigungselemente verwendet werden, die sich vom Träger lösen, sobald eine konstruktiv vorgegebene Haltekraft überschritten wird. Der Vorteil solcher Befestigungselemente ist, dass sie es ermöglichen, das Verkleidungsteil mit geringem Aufwand zu demontieren. Der Nachteil besteht darin, dass sie nur eine vergleichsweise geringe Haltekraft bereitstellen, die u.U. unabsichtlich im Betrieb überschritten wird, was dann dazu führt, dass sich das Verkleidungsteil versehentlich vom Träger löst.

Aus dem Stand der Technik sind auch bereits Befestigungselemente bekannt, die nicht ohne weiteres von ihrem Träger abgezogen werden können, sondern bei denen zusätzliche Schritte notwendig sind, wenn die Befestigungselemente vom Träger gelösten werden sollen.

Beispielsweise offenbart die DE 199 54 293 A1 eine Zierleistenbefestigung für Kraftwagen mit einem Befestigungsclip, der über ein Fußteil in eine Öffnung eines Bleches oder dergleichen einsetzbar und dort durch einen in eine zentrale Bohrung des Befestigungsclips eintreibbaren Spreizstift festlegbar ist. Der Befestigungsclip weist eine Auflageplatte und im Abstand davon ein Kopfstück auf, das von der Zierleiste wenigstens teilweise umgriffen wird. Am Kopfstück ist eine bis zum Spreizstift ragende Aussparung vorgesehen, und am Spreizstift ist eine schlitzartige Ausnehmung angeordnet, so dass eine Demontage des Spreizstiftes entgegen der Einschubrichtung mittels eines Hilfswerkzeuges ermöglicht wird.

Der Einsatz eines Spreizstiftes ist aber umständlich und erhöht die Anzahl der zu montierenden Teile.

In der JP S63 181 561 U ist ein Befestigungselement gezeigt, das zur Befestigung von Verkleidungsteilen an einem Träger vorgesehen ist und zwei Rastabschnitte zur sicheren Befestigung aufweist. An diesen Rastabschnitten sind Löselaschen mit kreisförmigen Löchern angebracht, die mit Hilfe eines kegelförmigen Werkzeugs zum Lösen des Befestigungselements genutzt werden können.

Die US 2014/0003884 A1 zeigt ein Befestigungselement aus Kunststoff zur Befestigung von Verkleidungsteilen im Automobilbau. Das Befestigungselement weist einen zylinderförmigen Grundkörper mit mehreren Spreizarmen auf, die am Träger verrasten können. An diesen Spreizarmen ist zusätzlich ein Zugelement angebracht, das in axialer Richtung betätigt werden kann, um die Spreizarme freizugeben und das Befestigungselement zu lösen.

In der gattungsbildenden DE 10 2004 057 400 A1 ist ein Verkleidungsteil für ein Frontsitz eines Kraftfahrzeugs gezeigt. Das Verkleidungsteil umfasst einen Metallclip, der an der Innenseite des Verkleidungsteils angeordnet ist und mit einem am Sitz ausgebildeten Anschlag eine Clipverbindung bildet. An dem Verkleidungsteil ist weiter ein Führungskanal vorgesehen, über den beispielsweise mit Hilfe eines Schraubendrehers die Clipverbindung wieder gelöst werden kann.

Es ist die Aufgabe der vorliegenden Erfindung, eine Baugruppe zum Befestigen von Verkleidungsteilen der eingangs genannten Art in vorteilhafter Weise weiterzubilden, insbesondere dahingehend, dass eine Baugruppe zum Befestigen von Verkleidungsteilen einfacher als bislang aufgebaut ist.

Diese Aufgabe wird erfindungsgemäß gelöst durch eine Baugruppe zum Befestigen von Verkleidungsteilen mit den Merkmalen des Anspruchs 1. Danach besteht die Baugruppeaus einem Befestigungselement zum Befestigen von Verkleidungsteilen und einem Träger für das Befestigungselement, wobei das Befestigungselement einen Befestigungsabschnitt, an dem ein Verkleidungsteil angebracht werden kann, und einen Rastabschnitt aufweist, der an dem Träger für das Befestigungselement verrasten kann, wobei der Rastabschnitt mindestens eine Rastlasche aufweist, wobei an der Rastlasche eine Löselasche vorgesehen ist, an der ein Werkzeug angreifen kann, mit dem die Rastlasche in eine Freigabeposition verstellt werden kann, und wobei der Träger eine Führung für das Werkzeug aufweist, das so an der Löselasche angreifen kann, dass die Rastlasche in eine Freigabestellung verstellt wird, wobei der Träger mit einer Öffnung versehen ist, in der die mindestens eine Rastlasche des Befestigungselements einrasten kann. Die Erfindung beruht auf dem Grundgedanken, das Befestigungselement mittels des Werkzeugs dann geeignet aktiv zu verformen, wenn das Befestigungselement vom Träger gelöst werden soll. Dies ermöglicht, das Befestigungselement so auszuführen, dass es grundsätzlich, also ohne Betätigung durch das Werkzeug, zuverlässig am Träger verrastet und dabei eine hohe Haltekraft bereitstellt. Die dabei verwendete Rastverbindung zwischen Befestigungselement und Träger muss nicht dahingehend ausgelegt werden, dass sich bei eine hohen Lösekraft das Befestigungselement automatisch vom Träger löst, beispielsweise durch geeignete Schrägen am Befestigungselement oder am Träger. Tatsächlich kann die Verbindung zwischen Träger und Befestigungselement selbsthaltend ausgeführt werden, beispielsweise mittels eines Hinterschnitts. Wenn das Befestigungselement gelöst werden soll, wird es mittels des Werkzeugs geeignet verformt, so dass es sich vom Träger löst. Dies gewährleistet, dass das Befestigungselement bei Bedarf mit geringer Kraft vom Träger gelöst werden kann. Die Führung bietet hierbei den Vorteil, dass das Werkzeug zum Lösen des Befestigungselements automatisch korrekt positioniert und geführt wird, so dass das Befestigungselement einfach und sicher gelöst werden kann. Dies ist insbesondere deshalb ein Vorteil, da das Werkzeug meist "blind" angesetzt werden muss, da das Befestigungselement meist nicht sichtbar angeordnet ist. Außerdem gewährleistet die Führung, dass die Einschubkraft in der "richtigen" Richtung wirkt, also in der Richtung, die zum Lösen des Befestigungselements nötig ist. Daher ist zum Lösen nur eine geringe Kraft notwendig, insbesondere nur eine Lösekraft von ca. 20 N

Die erzielbare Haltekraft kann vergleichsweise hoch sein. Beispielsweise kann die Haltekraft größer als 300 N sein.

Die Kraft, die für das Verrasten bzw. Einsetzen des Befestigungselements benötigt wird, kann vergleichsweise niedrig sein und z.B. ca. ein Siebtel bis ca. ein Zehntel der Haltekraft betragen. Beispielsweise kann die Einsetzkraft, die für das Verrasten des Befestigungselements aufgewandt werden muss, weniger als ca. 40 N betragen.

Die Lösekraft, d.h. die Kraft, die für das Lösen des montierten Befestigungselements aufgebracht werden muss, kann beispielsweise geringer als die Einsetzkraft sein und insbesondere lediglich ein ca. ein Drittel bis ca. die Hälfte der Einsetzkraft betragen. Beispielsweise kann die Lösekraft ca. 20 N betragen.

Das Befestigungselement kann ein Spritzgussteil sein. Hierdurch ergeben sich geringe Herstellungskosten.

Insbesondere kann das Befestigungselement einstückig ausgebildet sein. Dadurch entfallen Montagekosten für den Zusammenbau des Befestigungselements aus mehreren Einzelteilen.

Das Befestigungselement kann beispielsweise aus einem Thermoplast wie Polypropylen oder Polyamid bestehen.

Der Träger kann ein noch nachfolgend beschriebener Träger sein, der z.B. an einem Karosseriebauteil befestigbar ist.

Die Verbindung des Befestigungselements mit einem Verkleidungsteil kann insbesondere mittels eines gesonderten Zwischenstücks erfolgen.

Außerdem kann vorgesehen sein, dass die Löselasche am dem Befestigungsabschnitt zugewandten Ende der Rastlasche angeordnet ist. Dadurch ergibt sich der Vorteil, dass ein Werkzeug zum Demontieren des Befestigungselements nahe am Träger für das Befestigungselement und damit gut von außen erreichbar eingeführt und angesetzt werden kann.

Des Weiteren kann vorgesehen sein, dass die Rastlasche sich ausgehend von einem vom Befestigungsabschnitt abgewandten Ende des Rastabschnittes in Richtung zum Befestigungsabschnitt erstreckt. Dadurch ergibt sich der Vorteil, dass die Rastlasche vergleichsweise lang und damit flexibel ausgebildet ist. Dies beeinflusst und erhöht vorteilhaft die Haltekraft. Gleichzeitig führt die Flexibilität dazu, dass das Verrasten und Lösen des Befestigungselements mit geringen Kräften möglich ist.

Am Befestigungsabschnitt können zwei Rastlaschen angeordnet sein, die einander symmetrisch gegenüberliegen. Dies ermöglicht eine gleichmäßige Kraftverteilung und auch eine gleichmäßige Aufbringung der Haltekraft durch das Befestigungselement. Außerdem wird hierdurch auch das Verrasten und Lösen des Befestigungselements erleichtert.

Die Rastlaschen können im Wesentlichen identisch aufgebaut sein.

Des Weiteren kann vorgesehen sein, dass mindestens ein Vorspannelement vorgesehen ist, das das Befestigungselement vom Träger weg beaufschlagt, wenn das Befestigungselement dort verrastet ist. Durch ein derartiges Vorspannelement wird es möglich, das Befestigungselement im Träger zu verspannen und hierdurch Vibrationen zu verringern bzw. sogar ganz zu vermeiden. Eine als unangenehm empfundene Geräuschbildung kann so unterdrückt werden.

Es können mehrere Vorspannelemente, insbesondere zwei Vorspannelemente vorgesehen sein. Die Vorspannelemente können symmetrisch angeordnet sein.

Es kann insbesondere vorgesehen sein, dass die Vorspannelemente flügelartig, kissenartig oder stegartig ausgebildet sind.

Vorteilhafterweise kann eine Einführschräge für das Werkzeug vorgesehen sein. Dies erleichtert das Einführen und korrekte Ansetzen des Werkzeugs.

Des Weiteren kann vorgesehen sein, dass die Führung als rechteckiger Führungskanal ausgebildet ist. Dadurch ergeben sich automatisch einander paarweise gegenüberliegende Führungsflächen, mit denen das Werkzeug mit geringem Aufwand geführt werden kann. Außerdem kann ein rechteckiger Führungskanal einfach ausgebildet werden.

Vorzugsweise ist das Werkzeug zum Demontieren des Befestigungselements aus Flachmaterial ausgeführt und weist zwei einander gegenüberliegende Löseschrägen auf. Hierdurch ergibt sich eine geringe Höhe des Werkzeugs, was zu einem insgesamt flachen Aufbau der erfindungsgemäßen Baugruppe führt. Die Löseschrägen sind dabei vorteilhafterweise so angeordnet, dass sie beim Einschieben des Werkzeugs automatisch mit den Löselaschen des Befestigungselements in Eingriff gelangen und diese derart zusammendrücken, dass die Verrastung des Befestigungselements gelöst wird. Das Befestigungselement kann dann einfach aus dem Tragelement entfernt werden.

Der Grundkörper des Werkzeugs kann langgestreckt sein und einen rechteckigen Querschnitt aufweisen. Ein solcher Querschnitt kann mit geringem Aufwand entweder durch Ausstanzen des Werkzeugs aus Blech oder durch Spritzgießen des Werkzeugs erhalten werden. Dabei ist der Querschnitt des Werkzeugs so an den Führungskanal des Tragelements für das Befestigungselement angepasst, dass das Werkzeug gut eingeschoben werden kann, gleichzeitig aber zuverlässig so geführt ist, dass die Löseschrägen an den Löselaschen angreifen.

Weitere Merkmale und Vorteile der Erfindung ergeben sich aus der nachfolgenden Beschreibung und aus der nachfolgenden Zeichnung, auf die Bezug genommen wird. In den Zeichnungen zeigen:
- Figur 1 eine perspektivische Ansicht einer Variante eines Befestigungselements für eine erfindungsgemäße Baugruppe;
- Figur 2 eine weitere perspektivische Ansicht des Befestigungselements von Figur 1;
- Figur 3 eine Seitenansicht des Befestigungselements der Figuren 1 und 2;
- Figur 4 eine weitere Seitenansicht des Befestigungselements der Figuren 1 und 2;
- Figur 5 eine Draufsicht auf das Befestigungselement der Figuren 1 und 2;
- Figur 6 eine perspektivische Ansicht einer Variante eines Trägers für eine erfindungsgemäße Baugruppe, der dafür vorgesehen ist, mit dem Befestigungselement der Figuren 1 bis 5 zusammenzuwirken;
- Figur 7 eine perspektivische Draufsicht auf ein Aufnahmeelement für das Befestigungselement gemäß Figur 1 bis 5;
- Figur 8 eine perspektivische Ansicht einer Variante eines Werkzeugs für eine erfindungsgemäße Baugruppe, das dafür vorgesehen ist, mit einem Befestigungselement für eine erfindungsgemäße Baugruppe zusammenzuwirken;
- Figur 9 die Löseschrägen des Werkzeugs von Figur 8 in einer vergrößerten Draufsicht;
- Figur 10 die Löseschrägen des Werkzeugs von Figur 8 in einer nochmals vergrößerten Seitenansicht; und
- Figur 11 das im Träger montierte Befestigungselement mit daran angreifendem Werkzeug in einer perspektivischen Ansicht.

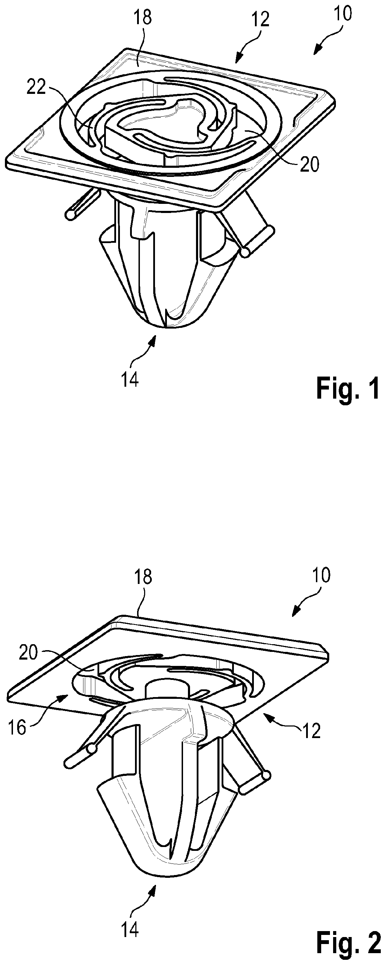

In den Figuren 1 bis 5 ist als ein Ausführungsbeispiel der Erfindung ein Befestigungselement 10 gezeigt.

Das Befestigungselement 10 weist einen Befestigungsabschnitt 12 und einen Rastabschnitt 14 auf. Der Befestigungsabschnitt 12 ist dafür vorgesehen, mit einem zu befestigenden Bauteil verbunden zu werden. Hierfür kann ein Aufnahmeelement vorgesehen sein, das einstückig mit dem Bauteil ausgeführt sein kann oder als separates, am Bauteil angebrachtes Teil. Der Rastabschnitt 14 ist dafür vorgesehen, in einem später erläuterten Träger zu verrasten, so dass dann das zu befestigende Bauteil am Träger angebracht ist. Auch der Träger kann als separates Teil ausgeführt werden oder in ein anderes Teil integriert werden.

Der Befestigungsabschnitt 12 weist einen zylindrischen Abschnitt 16 und eine am zylindrischen Abschnitt 16 angeformte, im Wesentlichen rechteckige Plattform 18 auf. Die rechteckige Grundform der Plattform gewährleistet im Zusammenspiel mit einem geeignet ausgestalteten Aufnahmeelement, dass das Befestigungselement 10 nur in der korrekten Ausrichtung in das Aufnahmeelement eingeschoben werden kann. Hierfür sind die Abmessungen des Aufnahmeelements auf die kleinere Breite der Plattform abgestimmt; um 90° verdreht, also mit der größeren Breite, kann die Plattform nicht in das Aufnahmeelement eingeschoben werden.

Wie aus Figur 2 ersichtlich, weist die Plattform 18 in ihrem Zentrum eine Öffnung 20 auf. Das der Plattform 18 zugewandte Ende des zylindrischen Abschnitts 16 ragt in die Öffnung 20 hinein und ist mit der Plattform 18 über mehrere Federstege 22 verbunden.

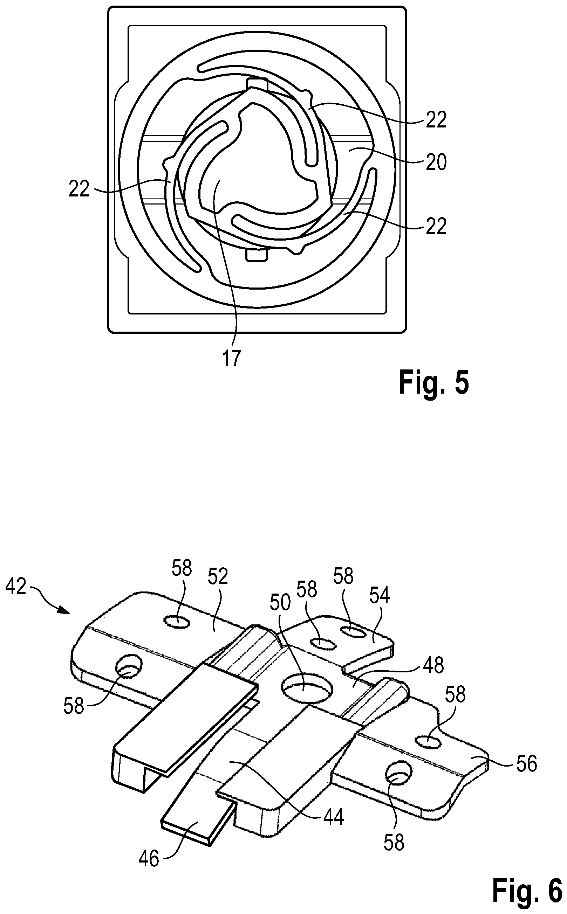

Die Federstege 22 sind spiralförmig ausgebildet, wie gut in Figur 5 zu sehen ist.

Die Federstege 22 sind an einem im Wesentlichen dreieckigen Endabschnitt 17 des zylindrischen Abschnitts 16 angelenkt. Die Federstege erstecken sich dabei über einen großen Teil ihrer Länge entlang den Außenflächen des Endabschnitts, so dass sie dort bei großen Auslenkungen in Anlage gelangen und abgestützt werden. Dies verhindert eine übermäßig große Auslenkung des Endabschnitts und damit eine übermäßig große Verformung und Belastung der Federstege.

Der Rastabschnitt 14 weist einen Mittelsteg 15 und zwei Rastlaschen 24 auf, die einander symmetrisch gegenüberliegen. Die beiden Rastlaschen 24 sind identisch aufgebaut.

Die Rastlaschen 24 erstrecken sich ausgehend von einem vom Befestigungsabschnitt 12 abgewandten Ende des Rastabschnitts 14 in Richtung zum Befestigungsabschnitt 12.

An den Rastlaschen 24 ist jeweils eine Löselasche 26 vorgesehen, die auf der dem Befestigungsabschnitt 12 zugewandten Ende der Rastlasche 24 angeordnet ist.

Gegenüber den freien Enden der Löselaschen 26 ist am von der Plattform 18 abgewandten Ende des zylindrischen Abschnitts 16 ein Flansch 28 vorgesehen. An dem Flansch 28 sind wiederum symmetrisch zueinander zwei Vorspannelemente 30 angeordnet.

Die Vorspannelemente 30 stehen vom Flansch 28 in einem spitzen Winkel in Richtung auf den Rastabschnitt 14 ab und sind in diesem Ausführungsbeispiel flügelartig ausgebildet.

Die von der Plattform 18 angewandte Spitze des Mittelstegs 15 des Rastabschnitts 14 und die dem Rastabschnitt 14 zugewandte Seite der Plattform 18 sind 21,4 mm voneinander beabstandet.

Die Plattform 18 weist eine Dicke von 2,2 mm auf. Wie aus der Draufsicht auf die Plattform 18 in Figur 5 ersichtlich ist, hat die Plattform 18 eine rechteckige Grundform mit einer Länge von 28,4 mm und einer Breite von 25,6 mm.

Der zylindrische Abschnitt 16 hat einen Durchmesser von 4,9 mm.

Die Rastlaschen 24 weisen jeweils einen elastisch verformbaren Federabschnitt 32 auf, mit dem diese federnd an dem Mittelsteg 15 angelenkt sind. An den Federabschnitt 32 schließt ein sich verdickender Verstärkungsabschnitt 34 an, der im Rastzahn 36 endet.

An den Verstärkungsabschnitt 34 schließt dann die Löselasche 26 an. Die Löselasche 26 ist auf der dem Mittelsteg 15 zugewandten Seite des Verstärkungsabschnitts 34 angeordnet und erstreckt sich im unbelasteten Zustand des Befestigungselements 10 parallel zum Mittelsteg 15.

Die Löselaschen 26 weisen jeweils eine Länge von 5,7 mm auf. Die beiden dem Mittelsteg 15 zugewandten Innenseiten der Löselaschen 26 sind voneinander 9,2 mm beabstandet.

Auf der dem Mittelsteg 15 abgewandten Seite der Löselasche 26 sind abgerundete Werkzeugangriffsflächen 27 ausgebildet. Die Werkzeugangriffsflächen 27 definieren einen Kreis mit einem Durchmesser 11,8 mm.

Der Rastzahn 36 weist eine Zahnbrust 38 und einen Zahnrücken 39 auf. Die Spitzen der Rastzähne 36 sind 15,1 mm voneinander beabstandet.

Der Zahnrücken 39 ist durch die dem Mittelsteg 15 abgewandte Seite des Verstärkungsabschnitts 34 ausgebildet.

Der Übergang zwischen dem Federabschnitt 32 und dem Mittelsteg 15 ist auf der Innenseite, also in dem Bereich, in dem der Federabschnitt 32 in den Verstärkungsabschnitt 34 übergeht, mit einem Radius von 0,95 mm ausgeführt.

Die Vorspannelemente 30 stehen vom Flansch 28 in einem Winkel von 54° in Richtung auf den Rastabschnitt 14 ab. Die Spitze der Vorspannelemente 30 ist von der dem Rastabschnitt 14 zugewandten Seite der Plattform 18 10,5 mm beabstandet. Die beiden Spitzen der Vorspannelemente 30 sind 21,8 mm voneinander beabstandet.

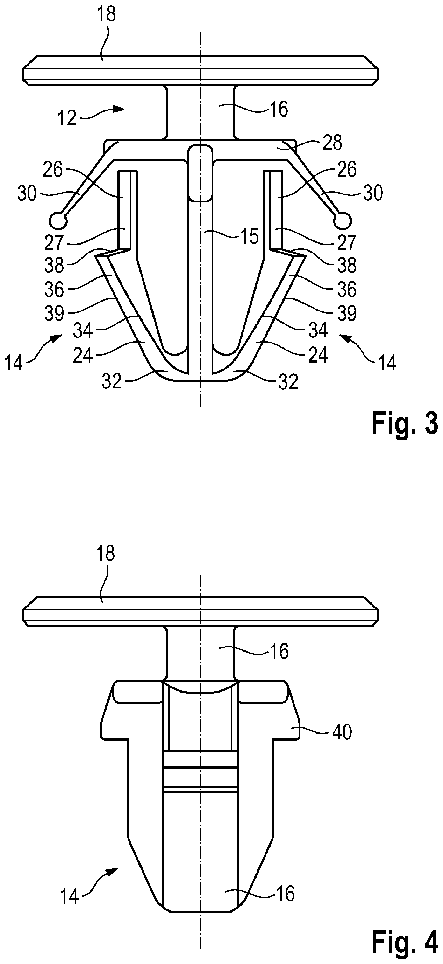

Aus der Seitenansicht gemäß Figur 4 ist erkennbar, dass der Mittelsteg 15 pfeilförmig ausgebildet ist. Der Grundkörper des Mittelstegs 15 weist eine Breite von 11,8 mm auf.

Im Bereich des Flansches 28 weist der Mittelsteg einen Absatz 40 auf, der eine Höhe von 4,5 mm hat. Der Absatz 40 hat einen Durchmesser von 16 mm.

Figur 6 zeigt eine perspektivische Draufsicht auf ein Ausführungsbeispiel eines Trägers 42 für das Befestigungselement 10 einer erfindungsgemäßen Baugruppe, wie es in den Figuren 1 bis 5 gezeigt ist.

Der Träger 42 weist eine Führung 44 auf, die als rechteckiger Führungskanal 44 ausgebildet ist.

Der Führungskanal 44 weist eingangsseitig eine Einführschräge 46 auf.

Ausgangsseitig des Führungskanals 44 weist der Träger 42 einen Mittelabschnitt 48 auf. Im Mittelabschnitt 48 ist eine zentrale kreisrunde Öffnung 50 vorgesehen.

Am Mittelabschnitt 48 sind des Weiteren drei Seitenabschnitte 52, 54, 56 angeformt, die Befestigungslöcher 58 aufweisen.

Der Träger 42 ist hier einstückig ausgebildet.

Beispielsweise kann der Träger 42 ein Metallbauteil oder Kunststoffbauteil oder ein Faserverbundwerkstoffbauteil sein.

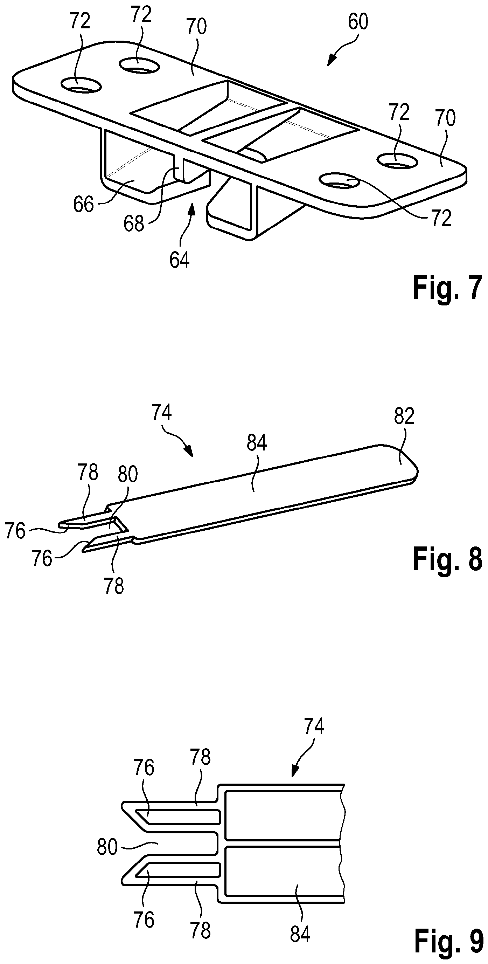

Figur 7 zeigt eine perspektivische Draufsicht auf ein Aufnahmeelement 60 für das Befestigungselement 10 gemäß Figur 1 bis 5.

Das Aufnahmeelement 60 weist im Mittelabschnitt 62 einen Einführkanal 64 mit einer Einführschräge 66 und einer Verrastungsrippe 68 auf.

Am Mittelabschnitt 62 sind zwei Seitenflügel 70 ausgebildet, die jeweils zwei Befestigungslöcher 72 aufweisen.

In den Figuren 8 bis 10 ist ein Werkzeug 74 zum Demontieren eines Befestigungselements 10 gezeigt.

Das Werkzeug 74 ist aus Flachmaterial ausgeführt und weist zwei einander gegenüberliegende Löseschrägen 76 auf.

Die Löseschrägen 76 sind hier jeweils endseitig an zwei parallelen Stiften 78 ausgebildet, die an einem Ende des Werkzeugs 74 angeformt sind.

Die Löseschrägen 76 und die Innenflächen der Stifte 78 begrenzen einen sich in Richtung auf das Werkzeug 74 verengenden Zwischenraum 80.

Dieser Zwischenraum 80 hat seine größte Breite auf Höhe der Spitzen der Löseschrägen 76 und verringert seine Breite entlang der Löseschrägen 76 in Richtung auf das Werkzeug 74.

Das Werkzeug 74 weist an seinem den Löseschrägen 76 abgewandten Enden einen Griffbereich 82 auf.

Im mittleren Bereich 84 des Werkzeugs 74 sind beispielsweise Informationen oder Label angebracht, aufgedruckt oder eingeprägt.

Die Löseschrägen 76 sind symmetrisch angeordnet und weisen einen Öffnungswinkel von 90° auf.

Die Löseschrägen 76 sind am Ende des Bereichs 84 angeformt, der hier eine Breite von 24 mm aufweist.

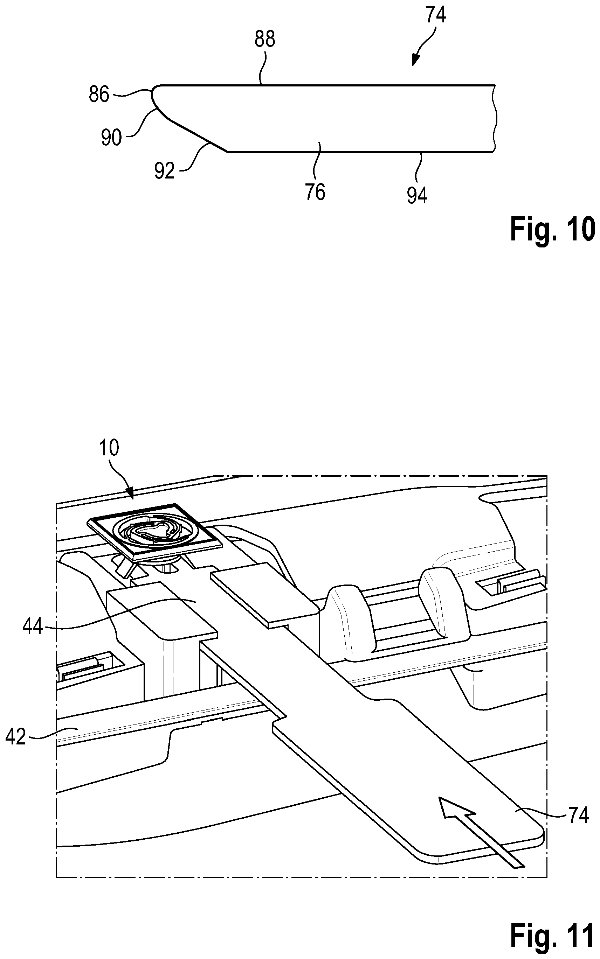

Wie weiter aus der Detail-Seitenansicht gemäß Figur 10 auf die Löseschrägen 76 des Werkzeugs 74 ersichtlich ist, bilden die Löseschrägen 76 in der Seitenansicht gesehen eine abgerundete Spitze 86 aus.

Die abgerundete Spitze 86 weist hier in diesem Ausführungsbeispiel einen Radius von 0,5 mm auf.

Die abgerundete Spitze 86 ist dabei auf Höhe einer Flachseiten, hier der Oberseite 88 angeordnet.

Von der Spitze 86 aus verläuft in Seitenansicht eine erste Seitenschräge 90 unter einem Winkel von 55°, an die dann eine zweite Seitenschräge 92 unter einem von Winkel 30° zur zweiten Flachseite, hier der Unterseite 94, anschließt.

Die Funktion des Befestigungselements 10 lässt sich wie folgt beschreiben:

Mittels des Rastabschnittes 14 wird das Befestigungselement 10 in der zentralen kreisrunden Öffnung 50 des Träger 42 verrastet.

Die Einsetzkraft hierfür beträgt dabei beispielsweise weniger als 40 N.

Die Gestaltung der Rastlaschen 24 ermöglicht Haltekräfte von mehr als 300 N.

Der Befestigungsabschnitt 12 wird mit der Plattform 18 in das Aufnahmeelement 60 eingesetzt.

Hierzu wird die Plattform 18 in den Einführkanal 64 eingeschoben, was durch die Einführschräge 66 erleichtert wird. Die Verrastungsrippe 68 verhindert ein Herausrutschen der Plattform 18. Das Aufnahmeelement 60 wird beispielsweise mittels der Befestigungslöcher 72 mit einem Verkleidungsteil verclipst.

Mittels der Federstege 22 lässt sich ein eventueller seitlicher Versatz zwischen dem Träger 42 und dem Aufnahmeelement 60 für das Verkleidungsteil ausgleichen.

Figur 11 zeigt in perspektivischer Draufsicht das montierte Befestigungselement 10 im Träger 42, allerdings ohne das Aufnahmeelement 60.

Um das Befestigungselement 10 zu lösen, wird das Werkzeug 74 mit den Löseschrägen 76 voran in den rechteckige Führungskanal 44 eingeschoben, was durch die eingangsseitige Einführschräge 46 erleichtert wird. Auch eine gewisse Flexibilität des Werkzeugs erleichtet das Einschieben.

Durch den Führungskanal 44 werden die Löseschrägen 76 auf die Löselaschen 26 zubewegt. Die Löselaschen 26 werden durch das Ansetzen der Löseschrägen 76 in den Zwischenraum 80 gedrückt und damit in Richtung des Mittelstegs 15 des Befestigungselements 10.

Dadurch werden die Rastlaschen 24 aus ihrer Verrastung in der Öffnung 50 gelöst, und das Befestigungselement 10 kann entfernt werden.

Für das Lösen der Verrastung ist gemäß diesem Ausführungsbeispiel nur eine Lösekraft von weniger als 20 N aufzuwenden.

## Patentansprüche

1. Baugruppe bestehend aus einem Befestigungselement (10) zum Befestigen von Verkleidungsteilen und einem Träger (42) für das Befestigungselement (10), wobei das Befestigungselement (10) einen Befestigungsabschnitt (12), an dem ein Verkleidungsteil angebracht werden kann, und einen Rastabschnitt (14) aufweist, der an dem Träger (42) für das Befestigungselement (10) verrasten kann, wobei der Rastabschnitt (14) mindestens eine Rastlasche (24) aufweist, wobei an der Rastlasche (24) eine Löselasche (26) vorgesehen ist, an der ein Werkzeug (74) angreifen kann, mit dem die Rastlasche (24) in eine Freigabeposition verstellt werden kann, **dadurch gekennzeichnet, dass** der Träger eine Führung (44) für das Werkzeug (74) aufweist, das so an der Löselasche (26) angreifen kann, dass die Rastlasche (24) in eine Freigabestellung verstellt wird, wobei der Träger (42) mit einer Öffnung (50) versehen ist, in der die mindestens eine Rastlasche (24) des Befestigungselements (10) einrasten kann.

2. Baugruppe nach Anspruch 1, **dadurch gekennzeichnet, dass** die Löselasche (26) am dem Befestigungsabschnitt (12) zugewandten Ende der Rastlasche (24) angeordnet ist.

3. Baugruppe nach Anspruch 1 oder Anspruch 2, **dadurch gekennzeichnet, dass** die Rastlasche (24) sich ausgehend von einem vom Befestigungsabschnitt (12) abgewandten Ende des Rastabschnittes (14) in Richtung zum Befestigungsabschnitt (12) erstreckt.

4. Baugruppe nach einem der vorhergehenden Ansprüche, **dadurch gekennzeichnet, dass** am Befestigungsabschnitt (12) zwei Rastlaschen (24) angeordnet sind, die einander symmetrisch gegenüberliegen.

5. Baugruppe nach einem der vorhergehenden Ansprüche, **dadurch gekennzeichnet, dass** mindestens ein Vorspannelement (30) vorgesehen ist, das das Befestigungselement (10) vom Träger (42) weg beaufschlagt, wenn das Befestigungselement (10) dort verrastet ist.

6. Baugruppe nach einem der vorhergehenden Ansprüche, **dadurch gekennzeichnet, dass** eine Einführschräge (46) für das Werkzeug (74) vorgesehen ist.

7. Baugruppe nach einem der vorhergehenden Ansprüche, **dadurch gekennzeichnet, dass** die Führung (44) als rechteckiger Führungskanal ausgebildet ist.

8. Baugruppe nach einem der vorhergehenden Ansprüche, **dadurch gekennzeichnet, dass** das Werkzeug (74) aus Flachmaterial ausgeführt ist und zwei einander gegenüberliegende Löseschrägen (76) aufweist.

## Claims

1. Assembly consisting of a fastening element (10) for fastening trim parts and of a carrier (42) for the fastening element (10), wherein the fastening element (10) has a fastening portion (12), on which a trim part can be mounted, and a latching portion (14) which can latch on the carrier (42) for the fastening element (10), wherein the latching portion (14) has at least one latching tab (24), wherein a release tab (26) is provided on the latching tab (24) and can be acted upon by a tool (74) which allows the latching tab (24) to be moved into a release position, **characterized in that** the carrier has a guide (44) for the tool (74) which can act on the release tab (26) in such a way that the latching tab (24) is moved into a release position, wherein the carrier (42) is provided with an opening (50) in which the at least one latching tab (24) of the fastening element (10) can latch.

2. Assembly according to Claim 1, **characterized in that** the release tab (26) is arranged at the end of the latching tab (24) that faces towards the fastening portion (12).

3. Assembly according to Claim 1 or to Claim 2, **characterized in that** the latching tab (24) extends in the direction of the fastening portion (12), starting from an end of the latching portion (14) that faces away from the fastening portion (12).

4. Assembly according to one of the preceding claims, **characterized in that** two latching tabs (24), which are symmetrically opposite one another, are arranged on the fastening portion (12).

5. Assembly according to one of the preceding claims, **characterized in that** at least one biasing element (30) is provided which urges the fastening element (10) away from the carrier (42) when the fastening element (10) is latched there.

6. Assembly according to one of the preceding claims, **characterized in that** an insertion slope (46) for the tool is provided.

7. Assembly according to one of the preceding claims, **characterized in that** the guide (44) is formed as a rectangular guide channel.

8. Assembly according to one of the preceding claims, **characterized in that** the tool (74) is constructed from flat material and has two mutually opposite release slopes (76).

## Revendications

1. Module constitué d'un élément de fixation (10) pour la fixation de pièces de revêtement et d'un support (42) pour l'élément de fixation (10), l'élément de fixation (10) présentant une portion de fixation (12) au niveau de laquelle peut être montée une pièce de revêtement, et une portion d'encliquetage (14) qui peut s'encliqueter sur le support (42) pour l'élément de fixation (10), la portion d'encliquetage (14) présentant au moins une patte d'encliquetage (24), une patte de libération (26) étant prévue sur la patte d'encliquetage (24), au niveau de laquelle peut s'engager un outil (74) avec lequel la patte d'encliquetage (24) peut être déplacée dans une position de libération,
**caractérisé en ce que**
le support présente un guide (44) pour l'outil (74), lequel peut s'engager sur la patte de libération (26) de telle sorte que la patte d'encliquetage (24) soit déplacée dans une position de libération, le support (42) étant pourvu d'une ouverture (50) dans laquelle peut s'encliqueter l'au moins une patte d'encliquetage (24) de l'élément de fixation (10).

2. Module selon la revendication 1, **caractérisé en ce que** la patte de libération (26) est disposée au niveau de l'extrémité de la patte d'encliquetage (24) tournée vers la portion de fixation (12).

3. Module selon la revendication 1 ou la revendication 2, **caractérisé en ce que** la patte d'encliquetage (24) s'étend à partir d'une extrémité de la portion d'encliquetage (14) opposée à la portion de fixation (12) dans la direction de la portion de fixation (12).

4. Module selon l'une quelconque des revendications précédentes, **caractérisé en ce que** deux pattes d'encliquetage (24) sont disposées au niveau de la portion de fixation (12), lesquelles sont opposées l'une à l'autre symétriquement.

5. Module selon l'une quelconque des revendications précédentes, **caractérisé en ce qu'**au moins un élément de précontrainte (30) est prévu, lequel sollicite l'élément de fixation (10) à l'écart du support (42) lorsque l'élément de fixation (10) y est encliqueté.

6. Module selon l'une quelconque des revendications précédentes, **caractérisé en ce qu'**un biseau d'introduction (46) pour l'outil (74) est prévu.

7. Module selon l'une quelconque des revendications précédentes, **caractérisé en ce que** le guide (44) est réalisé sous forme de canal de guidage rectangulaire.

8. Module selon l'une quelconque des revendications précédentes, **caractérisé en ce que** l'outil (74) est réalisé en matériau plat et présente deux biseaux de libération mutuellement opposés (76).
